# FASCICULE DE BREVET EUROPEEN

(11) **EP 1 878 649 B1**
(45) Date de publication et mention de la délivrance du brevet: **07.01.2009**
(21) Numéro de dépôt: 07290842.9
(22) Date de dépôt: 04.07.2007
(51) Int. Cl.: B62M 3/02

(54) **Pedalier de cycle**
Fahrradtretkurbel
Bicycle crank

(30) Priorité: 13.07.2006 FR 0606435
(43) Date de publication de la demande: 16.01.2008
(73) Titulaire: Look Cycle International, 58000 Nevers (FR)
(72) Inventeur: Bouchez, Julien, 45220 Saint Germain des Pres (FR)
(74) Mandataire: Laget, Jean-Loup

(56) Documents cités:
- WO-A-99/67125
- DE-A1- 4 404 796
- FR-A- 318 003
- FR-A- 572 587
- FR-A- 720 834
- FR-A- 720 835
- FR-A- 993 771
- FR-A- 2 416 829
- FR-A- 2 477 498
- FR-A- 2 528 377
- FR-A1- 2 513 208

## Description

La présente invention concerne un pédalier de cycle.

Les pédaliers de cycle classiques comportent deux manivelles s'étendant parallèlement l'une à l'autre en sens opposés de part et d'autre d'un axe de pédalier auquel elles sont reliées pour l'entraîner en rotation lors du pédalage. Les manivelles comportent généralement à leur extrémité libre des moyens de fixation sous forme d'un trou taraudé destiné à recevoir l'extrémité filetée d'un axe de pédale respectif.

Tout comme la taille du cadre, la longueur des manivelles correspond à la morphologie du cycliste, en particulier la longueur des jambes. Cependant, cette longueur de manivelle ne peut pas être directement proportionnelle à la longueur de jambe du fait que des paramètres techniques, tels par exemple que la garde au sol en virage, limitent la variation possible.

Ainsi, la longueur de manivelle varie généralement dans une plage totale de 170 à 180 mm, les longueurs les plus usuelles étant 170, 172,5 et 175 mm.

La longueur des manivelles est par conséquent généralement fixe, ce qui impose au cycliste de bien connaître avant l'achat du cycle la longueur préconisée pour sa pratique, d'une part en fonction de la longueur de ses jambes, et d'autre part en fonction du type d'épreuve à laquelle il a l'intention de participer. En effet, par exemple une épreuve de vitesse sur une courte distance exige du cycliste le maximum de puissance sur une durée limitée et cela l'incite à augmenter la longueur du bras de levier défini par les manivelles du pédalier et qui correspond à la distance ou l'entraxe entre l'axe de pédalier et l'axe de pédale.

Il existe ainsi un besoin de pouvoir modifier cet entraxe entre l'axe de pédalier et l'axe de pédale et plusieurs dispositifs sont connus qui permettent une telle modification.

On connaît ainsi un certain nombre de dispositifs dans lesquels on utilise un insert disposé dans un logement prévu dans la manivelle et comportant le trou taraudé recevant l'extrémité filetée de l'axe de pédale correspondant. L'insert peut être fixé dans des positions différentes afin de faire varier l'entraxe entre l'axe de pédalier et l'axe de pédale. Ce type de dispositif est connu des documents FR2416829, FR720835, FR318003 et FR720834.

Le document WO99/67125divulgue un pédalier de cycle selon le préambule de la revendication 1.

Un autre dispositif connu vise à optimiser la fabrication des manivelles en réalisant, à partir d'une ébauche commune suffisamment longue, des positions d'implantation différentes pour le logement taraudé dans lequel l'extrémité filetée de l'axe de pédale est vissé pour y être fixée.

Dans le cas de manivelles ultra-légères en matériaux composites par exemple, il est aussi connu d'utiliser un insert métallique allongé pour remplir ce rôle. D'autres dispositifs plus sophistiqués présentent une variation possible de la position de l'axe de pédale au moyen d'un excentrique ou d'un barillet. La plupart de ces dispositifs additionnels ne concernent que la seule manivelle au niveau de sa liaison soit avec l'axe du boîtier de pédalier, soit avec l'axe de pédale. L'axe de pédalier et l'axe de pédale restent donc dans ce cas inchangés.

Encore un autre dispositif de ce genre est connu du FR 2 513 208 qui décrit un pédalier dans lequel un premier et un deuxième raccords sont fixés dans un alésage traversant chaque manivelle, à partir de ses deux côtés, avec des premier et second alésages de montage excentriques par rapport à l'alésage traversant. Au moins l'un des alésages de montage est pourvu d'une partie filetée qui peut être vissée à l'arbre de la pédale, et un mécanisme anti-rotation est pourvu pour éviter la rotation du raccord. Les raccords sont maintenus sur la manivelle à l'aide de vis, et éventuellement à l'aide d'une coupelle, elle aussi excentrée et placée en vis-à-vis de la partie filetée de l'axe de pédale.

Ce dispositif est en outre très encombrant du fait qu'il nécessite un organe avec filetage destiné à recevoir l'axe de pédale, un organe destiné à la modification de l'entraxe, et des organes supplémentaires de fixation, le tout dans un espace limité dans la direction transversale du cycle qui est dû à une dimension maximale pour l'écartement des pieds du cycliste et donc des pédales.

Tous ces dispositifs connus comportent un très grand nombre de pièces usinées à haute précision et en raison des masses de ce dispositif additionnel et du dimensionnement de certains organes qui doivent être dimensionnés pour encaisser de très gros efforts, entre autres le couple de vissage de la pédale, le poids de la manivelle augmente fortement.

Le but de l'invention est de remédier aux inconvénients des pédaliers connus comportant des moyens destinés à permettre une modification de l'entraxe entre l'axe de pédalier et l'axe de pédale, en proposant un pédalier pourvu d'un dispositif extrêmement simple, léger et comportant un minimum de pièces et sans avoir recours à un insert séparé.

Un objet de l'invention est un pédalier de cycle, comportant deux manivelles s'étendant en sens opposés de part et d'autre d'un axe de pédalier, chaque manivelle étant à l'une de ses extrémités reliée audit axe de pédalier et présente à son extrémité opposée un logement apte à recevoir une extrémité libre d'un axe de pédale en définissant un entraxe entre ledit axe de pédalier et ledit axe de pédale, ledit logement étant associé à des moyens de fixation de l'axe de pédale à l'intérieur dudit logement, un embout de positionnement étant fixé de manière excentrée à ladite extrémité libre dudit axe de pédale, ledit embout de positionnement étant apte à être reçu dans ledit logement de la manivelle dans des positions angulaires différentes de manière à modifier ledit entraxe, lesdites positions angulaires étant définies par des méplats régulièrement disposés sur la périphérie dudit embout de positionnement et sont aptes à coopérer avec au moins un méplat prévu à l'intérieur dudit logement de la manivelle, caractérisé par le fait que la surface périphérique dudit embout de positionnement est globalement conique, ainsi que la surface de la paroi dudit logement de la manivelle de manière à être sensiblement complémentaires, et par le fait que lesdits méplats sont inclinés vers l'extrémité dudit embout de positionnement, et que ledit au moins un méplat dudit logement présente la même inclinaison.

Selon d'autres caractéristiques de l'invention :
- lesdits moyens de fixation de l'axe de pédale à l'intérieur dudit logement comportent une liaison filetée comprenant une vis traversant un trou central traversant dudit logement pour coopérer avec un taraudage prévu à l'extrémité dudit embout de positionnement ;
- au moins trois positions angulaires sont prévues ;
- un nombre important de méplats contigus est prévu de manière à former des facettes d'un embout de positionnement à forme prismatique ;
- des moyens d'indexage dudit embout de positionnement sont prévus ;
- lesdits moyens d'indexage comportent des repérages autour dudit logement et un marquage sur la face de l'embout de positionnement tournée vers l'axe de pédale.

Un autre objet de l'invention est un cycle pourvu d'un pédalier présentant les caractéristiques essentielles de l'invention.

D'autres caractéristiques et avantages de l'invention ressortiront de la description qui va suivre de deux modes de réalisation non limitatifs de l'invention, en référence aux figures annexées dans lesquelles :
- la figure 1 est une vue partielle éclatée en perspective d'un pédalier selon l'invention ;
- la figure 2 est une vue en perspective montrant un axe de pédale pourvu d'un embout de positionnement selon l'invention ;
- la figure 3 est une vue en perspective montrant l'axe de pédale de la figure 2 sous un autre angle ;
- la figure 4 est une vue d'extrémité de l'axe de pédale des figures 2 et 3 ;
- la figure 5 est une vue latérale d'une des manivelles du pédalier montrant le logement recevant l'embout de l'axe de pédale ;
- la figure 6 est une coupe longitudinale de la manivelle de la figure 5 ;
- la figure 7 est une vue d'ensemble en perspective montrant une pédale reliée à un pédalier selon l'invention ; et
- la figure 8 est une vue en perspective illustrant une variante à indexation du pédalier selon l'invention.

Dans les figures, les éléments identiques ou équivalents porteront les mêmes signes de référence. Par ailleurs, seule la partie gauche du pédalier est montrée sur les figures du fait que la partie droite est symétrique à cette partie gauche.

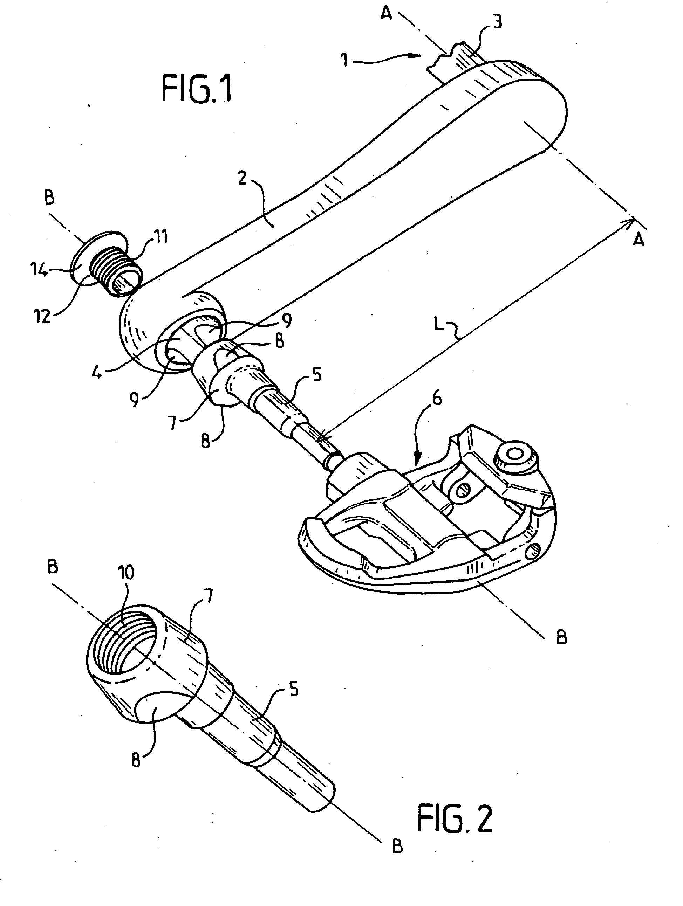

L'ensemble des éléments essentiels est illustré à la figure 1. La partie gauche d'un pédalier 1 selon l'invention y est montrée. Le pédalier 1 comporte deux manivelles dont une seule (2) est représentée. Les manivelles 2 s'étendent parallèlement l'une à l'autre en sens opposés de part et d'autre d'un axe de pédalier 3.

Chaque manivelle 2 est à l'une de ses extrémités reliée à l'axe de pédalier 3 et présente de manière classique à son extrémité opposée un logement 4 apte à recevoir une extrémité libre d'un axe de pédale 5. Ce logement 4 est associé à des moyens de fixation de l'axe de pédale 5 qui seront décrits en détail plus loin.

L'axe de pédale 5 porte une pédale 6 qui dans l'exemple illustré est une pédale gauche qui comporte des moyens d'enclenchement automatique d'une plaquette (non représentée) fixée sous la chaussure du cycliste. Cette pédale est bien connue dans le domaine du cycle et ne sera pas décrite plus en détail ici.

L'axe de pédalier 3 (A-A) et l'axe de pédale 5 (B-B) définissent entre eux un entraxe d'une longueur L.

La longueur L de l'entraxe peut selon l'invention être modifiée grâce au fait qu'un embout de positionnement 7 est fixé de manière excentrée à l'extrémité libre de l'axe de pédale 5, et que cet embout 7 est apte à être reçu dans le logement 4 de la manivelle 2 dans des positions angulaires différentes.

Dans l'exemple illustré sur les figures 1 à 6, l'embout de positionnement 7 peut prendre trois positions angulaires différentes dans le logement 4 de la manivelle 2.

Ces trois positions angulaires de l'embout de positionnement 7 sont définies par trois méplats 8 régulièrement disposés sur la périphérie de celui-ci. Ces trois méplats sont aptes à coopérer avec trois méplats 9 régulièrement prévus à l'intérieur du logement 4 de la manivelle. La différence angulaire d'une position de l'embout de positionnement 7 est donc de 120°.

Afin de faciliter la mise en place de l'embout de positionnement 7 à l'intérieur du logement 4 de la manivelle 2, la surface périphérique de l'embout est globalement conique, ainsi que la surface de la paroi du logement pour être sensiblement complémentaires. Les méplats 8 et 9 sont de préférence légèrement inclinés vers l'extrémité de l'embout 7 de manière à former des parties d'une pyramide imaginaire à trois faces.

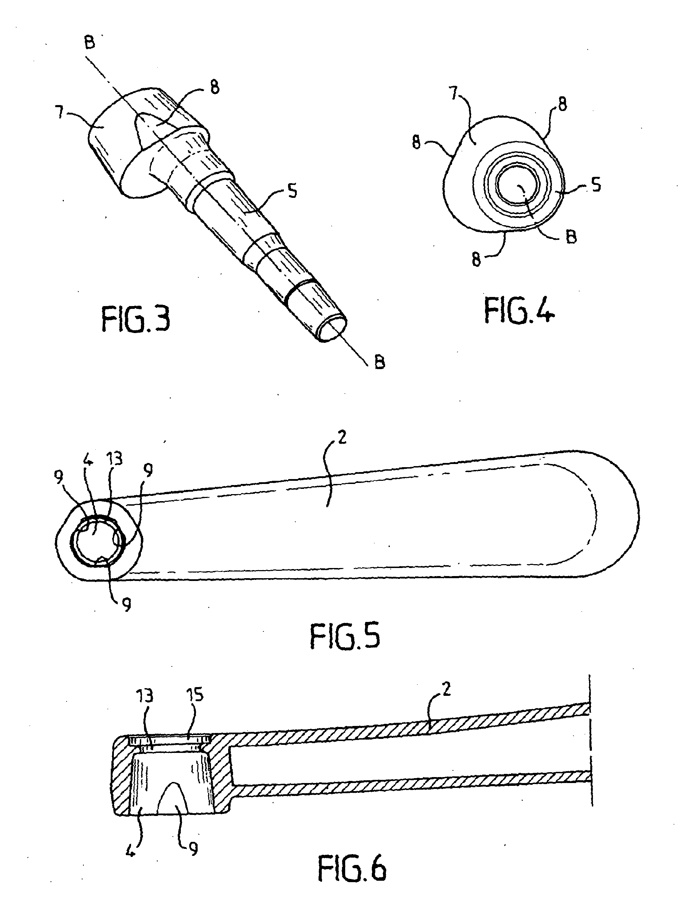

Les moyens de fixation de l'axe de pédale 5 à l'intérieur du logement 4 de la manivelle comportent dans l'exemple illustré sur les figures une liaison filetée. La liaison filetée comprend ici un taraudage prévu à l'extrémité de l'embout de positionnement 7 qui ainsi forme écrou et qui est apte à coopérer avec un filetage 11 d'une vis 12 disposée de l'autre côté du logement pour s'étendre à travers un trou central traversant 13 du logement 4 de la manivelle 2 (voir figures 5 et 6).

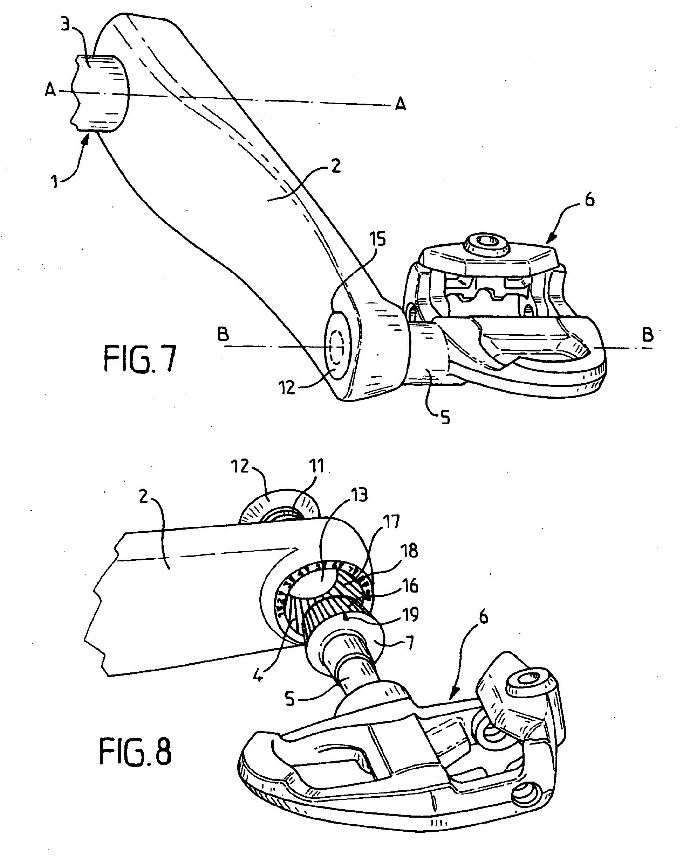

La tête 14 est plate et relativement mince et se loge dans un évidement 15 (voir figure 6) lorsque la vis 12 est vissée dans le taraudage 10 de l'embout de positionnement 7 de manière à se trouver au ras de la surface de la manivelle du même côté (voir figure 7).

La longueur L de l'entraxe entre l'axe de manivelle 2 et l'axe de pédale 5 est extrêmement facile à régler. Si l'on souhaite obtenir la plus courte des trois longueurs possibles dans le mode de réalisation illustré sur les figures 1 à 6, il suffit de présenter l'embout de positionnement 7 devant le logement 4 de telle manière que l'axe de pédale 5 se trouve dans une première position qui est la position la plus proche de l'axe de pédalier 3, et d'introduire ensuite l'embout de positionnement 7 dans le logement 4 pour l'y fixer à l'aide des moyens de fixation 10 à 12.

La deuxième position de l'embout de positionnement 7 dans le logement 4 est une position intermédiaire dans laquelle l'embout de positionnement 7 est tourné de 120° par rapport à la première position et la troisième position correspond à une position dans laquelle l'axe de pédale 5 est tourné de 240° par rapport à la première position et se trouve le plus éloigné de l'axe de pédalier 3.

Bien entendu, il convient de faire exactement le même réglage de l'autre axe de pédale 5 afin d'avoir la même longueur d'entraxe des deux côtés.

Dans une variante du premier mode de réalisation, un seul méplat 9 est effectué à l'intérieur du logement 4 de la manivelle pour coopérer avec trois ou plus de méplats 8 sur l'embout de positionnement 7. Le nombre de positions dépendra en effet uniquement du nombre de méplats 8 sur l'embout.

Finalement, la figure 8 montre un deuxième mode de réalisation dans lequel la périphérie de l'embout de positionnement 7 comporte un grand nombre de méplats contigus 16 formant facettes correspondant à des méplats contigus 17 formant facettes sur la paroi du logement 4 de la manivelle 2. L'embout de positionnement 7 présente ainsi une forme prismatique conique comme cela est illustré sur la figure 8.

Le grand nombre de facettes 16 et 17 apporte un nombre important de possibilités de positionnement angulaire l'embout de positionnement 7 dans le logement 4 et afin d'assurer exactement le même positionnement des deux axes de pédale 5, des moyens d'indexage de l'embout de positionnement 7 sont avantageusement prévus.

Ces moyens d'indexage comportent des repérages 18 en chiffres autour du logement 4 de la manivelle 2 et un marquage 19 sous forme d'une flèche sur la face de l'embout de positionnement 7 tournée vers l'axe de pédale 5.

Il est ainsi aisé de fixer l'embout de positionnement 7 de l'axe de pédale 5 dans la position souhaitée pour régler la longueur L de l'entraxe, de relever le chiffre 18 sur lequel pointe la flèche 19 et de faire le même réglage pour l'embout de positionnement 7 de l'autre axe de pédale.

On obtient de cette manière un réglage de la longueur L de l'entraxe qui est pratiquement continu et on peut être sûr d'obtenir exactement le même réglage des deux côtés.

Les moyens proposés par l'invention afin de mettre en oeuvre ce réglage de la longueur L de l'entraxe sont particulièrement simples du fait qu'ils sont dépourvus d'insert et comprennent très peu de pièces.

## Revendications

1. Pédalier de cycle, comportant deux manivelles (2) s'étendant en sens opposés de part et d'autre d'un axe de pédalier (3), chaque manivelle (2) étant à l'une de ses extrémités reliée audit axe de pédalier (3) et présente à son extrémité opposée un logement (4) apte à recevoir une extrémité libre d'un axe de pédale (5) en définissant un entraxe (L) entre ledit axe de pédalier (3) et ledit axe de pédale (5), ledit logement (4) étant associé à des moyens de fixation (10 à 12) de l'axe de pédale (5) à l'intérieur dudit logement (4), un embout de positionnement (7) étant fixé de manière excentrée à ladite extrémité libre dudit axe de pédale (5), ledit embout de positionnement (7) étant apte à être reçu dans ledit logement (4) de la manivelle (2) dans des positions angulaires différentes de manière à modifier ledit entraxe (L), lesdites positions angulaires étant définies par des méplats (8; 16) régulièrement disposés sur la périphérie dudit embout de positionnement (7) et sont aptes à coopérer avec au moins un méplat (9; 17) prévu à l'intérieur dudit logement (4) de la manivelle (2), **caractérisé par le fait que** la surface périphérique dudit embout de positionnement (7) est globalement conique, ainsi que la surface de la paroi dudit logement (4) de la manivelle (2) de manière à être sensiblement complémentaires, et **par le fait que** lesdits méplats (8; 16) sont inclinés vers l'extrémité dudit embout de positionnement, et que ledit au moins un méplat (9; 17) dudit logement (4) présente la même inclinaison.

2. Pédalier de cycle selon la revendication 1, **caractérisé par le fait que** lesdits moyens de fixation (10 à 12) de l'axe de pédale (5) à l'intérieur dudit logement (4) comportent une liaison filetée comprenant une vis (12) traversant un trou central traversant (13) dudit logement (4) pour coopérer avec un taraudage (10) prévu à l'extrémité dudit embout de positionnement (7).

3. Pédalier de cycle selon la revendication 1 ou 2, **caractérisé par le fait qu'**au moins trois positions angulaires sont prévues.

4. Pédalier de cycle selon l'une quelconque des revendications 1 ou 2, **caractérisé par le fait qu'**un nombre important de méplats contigus (16) sont prévus de manière à former des facettes d'un embout de positionnement à forme prismatique (7).

5. Pédalier de cycle selon l'une quelconque des revendications précédentes, **caractérisé par le fait que** des moyens d'indexage (18, 19) dudit embout de positionnement (7) sont prévus.

6. Pédalier de cycle selon la revendication 5, **caractérisé par le fait que** lesdits moyens d'indexage comportent des repérages (18) autour dudit logement (4) et un marquage (19) sur la face de l'embout de positionnement (7) tournée vers l'axe de pédale (5).

7. Cycle, **caractérisé par le fait qu'**il comporte un pédalier de cycle selon l'une quelconque des revendications précédentes.

## Claims

1. Bicycle crankset, comprising two cranks (2) that extend in opposite directions on both sides of a crankset shaft (3), whereby each crank (2) is connected to said crankset shaft (3) at one of its ends and has, at its opposite end, a housing (4) that can accommodate a free end of a pedal shaft (5) by defining a distance between centres (L) between said crankset shaft (3) and said pedal shaft (5), whereby said housing (4) is connected to means (10 to 12) for securing the pedal shaft (5) inside said housing (4), whereby a positioning tip (7) is secured in an eccentric manner to said free end of said pedal shaft (5), whereby said positioning tip (7) is able to be accommodated in said housing (4) of the crank (2) in different angular positions, so as to modify said distance between centres (L), whereby said angular positions are defined by flat surfaces (8; 16) placed uniformly on the periphery of said positioning tip (7) and are able to cooperate with at least one flat surface (9; 17) that is provided inside said housing (4) of the crank (2), **characterised by** the fact that the peripheral surface of said positioning tip (7) is generally conical, as well as the surface of the wall of said housing (4) of the crank (2) so as to be essentially complementary, and by the fact that said flat surfaces (8; 16) are inclined towards the end of said positioning tip, and said at least one flat surface (9; 17) of said housing (4) has the same inclination.

2. Bicycle crankset according to claim 1, **characterised by** the fact that said means (10 to 12) for securing the pedal shaft (5) inside said housing (4) comprise a threaded connection that comprises a screw (12) that passes through a central through hole (13) of said housing (4) to cooperate with a threading (10) that is provided at the end of said positioning tip (7).

3. Bicycle crankset according to claim 1 or 2, **characterised by** the fact that at least three angular positions are provided.

4. Bicycle crankset according to any one of claims 1 or 2, **characterised by** the fact that a significant number of contiguous flat surfaces (16) are provided so as to form facets of a positioning tip with a prismatic shape (7).

5. Bicycle crankset according to any one of the preceding claims, **characterised by** the fact that indexing means (18, 19) of said positioning tip (7) are provided.

6. Bicycle crankset according to claim 5, **characterised by** the fact that said indexing means comprise references (18) around said housing (4) and a marking (19) on the face of the positioning tip (7) that is rotated towards the pedal shaft (5).

7. Bicycle, **characterised by** the fact that it comprises a bicycle crankset according to any one of the preceding claims.

## Patentansprüche

1. Fahrradtretkurbel, aufweisend zwei Kurbeln (2), die sich in entgegengesetzter Richtung beiderseits einer Tretkurbelachse (3) erstrecken, wobei jede Kurbel (2) an einem ihrer Enden mit der Tretkurbelachse (3) verbunden ist und an ihrem gegenüberliegenden Ende ein Gehäuse (4) aufweist, das geeignet ist, ein freies Ende einer Pedalachse (5) unter Bestimmung eines Achsabstands (L) zwischen der Tretkurbelachse (3) und der Pedalachse (5) aufzunehmen, wobei das Gehäuse (4) mit Befestigungsmitteln (10 bis 12) der Pedalachse (5) im Inneren des Gehäuses (4) verbunden ist, wobei ein Positionieransatzstück (7) dezentriert am freien Ende der Pedalachse (5) befestigt ist, wobei das Positionieransatzstück (7) geeignet ist, im Gehäuse (4) der Kurbel (2) in verschiedenen Winkelpositionen aufgenommen zu werden, um den Achsabstand (L) zu modifizieren, wobei die Winkelpositionen durch Abflachungen (8; 16) bestimmt sind, die regelmäßig auf dem Umfang des Positionieransatzstücks (7) angeordnet sind, und geeignet sind, mit wenigstens einer im Innern des Gehäuses (4) der Kurbel (2) vorgesehenen Abflachung (9; 17) zusammenzuwirken, **dadurch gekennzeichnet, dass** die Umfangsfläche des Positionieransatzstücks (7) im Allgemeinen konisch ist, ebenso wie die Fläche der Wand des Gehäuses (4) der Kurbel (2), so dass sie im Wesentlichen komplementär sind, und **dadurch**, dass die Abflachungen (8; 16) zum Ende des Positionieransatzstücks hin geneigt sind, und dass die wenigstens eine Abflachung (9; 17) des Gehäuses (4) dieselbe Neigung aufweist.

2. Fahrradtretkurbel nach Anspruch 1, **dadurch gekennzeichnet, dass** die Befestigungsmittel (10 bis 12) der Pedalachse (5) im Innern des Gehäuses (4) eine Gewindeverbindung aufweisen, die eine eine mittige durchgehende Bohrung (13) des Gehäuses (4) durchdringende Schraube (12) aufweist, um mit einem am Ende des Positionieransatzstücks (7) vorgesehenen Innengewinde (10) zusammenzuwirken.

3. Fahrradtretkurbel nach Anspruch 1 oder 2, **dadurch gekennzeichnet, dass** wenigstens drei Winkelpositionen vorgesehen sind.

4. Fahrradtretkurbel nach einem der Ansprüche 1 oder 2, **dadurch gekennzeichnet, dass** eine erhebliche Anzahl von aneinandergrenzenden Abflachungen (16) vorgesehen ist, so dass sie Facetten eines Positionieransatzstücks prismatischer Form (7) bilden.

5. Fahrradtretkurbel nach einem der vorhergehenden Ansprüche, **dadurch gekennzeichnet, dass** Indexiermittel (18, 19) des Positionieransatzstücks (7) vorgesehen sind.

6. Fahrradtretkurbel nach Anspruch 5, **dadurch gekennzeichnet, dass** die Indexiermittel Kennzeichnungen (18) um das Gehäuse (4) herum aufweisen und eine Markierung (19) auf der der Pedalachse (5) zugewandten Vorderseite des Positionieransatzstücks (7).

7. Fahrrad, **dadurch gekennzeichnet, dass** es eine Fahrradtretkurbel nach einem der vorhergehenden Ansprüche aufweist.
